(19) Europäisches Patentamt
European Patent Office
Office européen des brevets

(11) EP 0 830 397 B1

(12) **EUROPÄISCHE PATENTSCHRIFT**

(45) Veröffentlichungstag und Bekanntmachung des Hinweises auf die Patenterteilung:
**08.09.1999 Patentblatt 1999/36**

(21) Anmeldenummer: **96917494.5**

(22) Anmeldetag: **04.06.1996**

(51) Int Cl.$^6$: **C08F 110/10**, C08F 2/00, C08F 4/14

(86) Internationale Anmeldenummer:
**PCT/EP96/02414**

(87) Internationale Veröffentlichungsnummer:
**WO 96/40808 (19.12.1996 Gazette 1996/55)**

(54) **VERFAHREN ZUR HERSTELLUNG VON NIEDERMOLEKULAREM, HOCHREAKTIVEM POLYISOBUTEN**

PROCESS FOR PREPARING LOW MOLECULAR, HIGHLY REACTIVE POLYISOBUTYLENE

PROCEDE DE PREPARATION DE POLYISOBUTENE TRES REACTIF DE FAIBLE POIDS MOLECULAIRE

(84) Benannte Vertragsstaaten:
**BE CH DE ES FI FR GB IT LI NL**

(30) Priorität: **07.06.1995 DE 19520078**

(43) Veröffentlichungstag der Anmeldung:
**25.03.1998 Patentblatt 1998/13**

(73) Patentinhaber: **BASF AKTIENGESELLSCHAFT**
**67056 Ludwigshafen (DE)**

(72) Erfinder: **RATH, Hans, Peter**
**D-67269 Grünstadt (DE)**

(56) Entgegenhaltungen:
**EP-A- 0 628 575** **WO-A-93/10063**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von niedermolekularem, hochreaktivem Polyisobuten eines mittleren Molekulargewichts $M_n$ von 500 bis 20000 Dalton und einem Gehalt an endständigen Doppelbindungen von über 80 mol-% durch die Polymerisation von Isobuten oder Isobuten-haltigen Kohlenwasserstoffströmen in der flüssigen Phase und mit Hilfe eines Bortrifluorid-Komplex-Katalysators bei Temperaturen von 0 bis -40°C und bei einem Druck von 1 bis 20 bar.

Niedermolekulare und hochmolekulare Polyisobutene mit Molekulargewichten bis zu mehreren 100000 Dalton sind seit langem bekannt und ihre Herstellung wird beispielsweise in H. Güterbock: Polyisobutylen und Mischpolymerisate, S. 77 bis 104, Springer, Berlin 1959, beschrieben. Die zur Zeit erhältlichen Polyisobutene dieses Molekulargewichtsbereiches werden meist mit Hilfe von Lewis-Säure-Katalysatoren, wie Aluminiumchlorid, Aluminiumalkylchloriden oder Bortrifluorid, hergestellt und haben meist weniger als 10 Mol-% endständige Doppelbindungen (Vinylidengruppierungen) und eine Molekulargewichtsverteilung (Dispersizität) zwischen 2 und 7.

Von diesen herkömmlichen Polyisobutenen sind die sogenannten hochreaktiven Polyisobutene zu unterscheiden, welche in der Regel mittlere Molmassen von 500 bis 5000 Dalton und einen hohen Gehalt an Vinylidengruppierungen von vorzugsweise deutlich über 60 Mol-% haben. Solche hochreaktiven Polyisobutene werden als Zwischenprodukt zur Herstellung von Additiven für Schmier- und Kraftstoffe verwendet, wie sie beispielsweise in DE-A 27 02 604 beschrieben sind. Zur Herstellung dieser Additive werden zunächst durch Reaktion der endständigen Doppelbindungen des Polyisobutens mit Maleinsäureanhydrid, Polyisobuten-Maleinsäureanhydrid-Addukte, insbesondere Polyisobutenylbernsteinsäureanhydride, erzeugt, welche anschließend mit bestimmten Aminen zum fertigen Additiv umgesetzt werden. Da bei der Adduktbildung mit Maleinsäureanhydrid hauptsächlich die Vinylidendoppelbindungen reagieren, wohingegen die weiter im Innern der Makromoleküle liegenden Doppelbindungen je nach ihrer Lage im Makromolekül ohne die Zugabe von Halogenen zu keinem oder zu einem deutlich geringeren Umsatz führen, ist der Anteil an endständigen Doppelbindungen im Molekül das wichtigste Qualitätakriterium für diesen Polyisobutentypus.

Über das Zustandekommen der Vinylidendoppelbindungen und die Isomerisierung der endständigen Doppelbindungen in den Isobutenmakromolekülen zu internen Doppelbindungen bestehen nach Puskas et al., J. Polymer Sci.: Symposium No. 56, 191 (1976) die im folgenden Formelschema wiedergegebenen Vorstellungen:

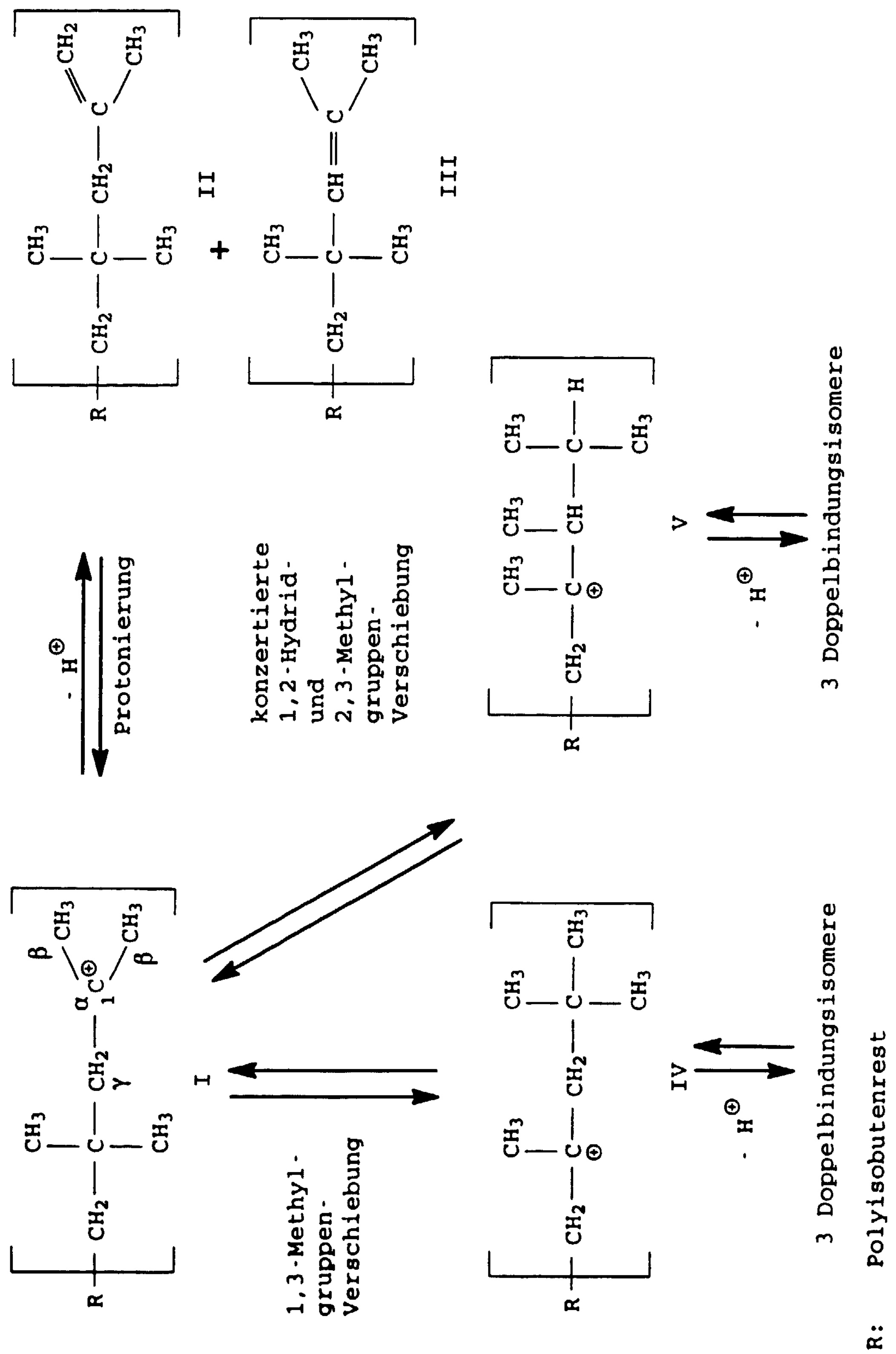


Das im Laufe der Polymerisationsreaktion entstehende Polyisobutenkation I kann durch die Abspaltung eines

Protons in das betreffende Polyisobuten übergehen. Dabei kann das Proton sowohl aus einer der β-Methylgruppen oder aus der internen γ-Methylengruppe abgespalten werden. Je nachdem aus welcher dieser beiden Positionen das Proton abgespalten wird, entsteht dabei ein Polyisobuten mit einer Vinylidendoppelbindung II oder mit einer trisubstituierten, nahe dem Ende des Moleküls befindlichen Doppelbindung III.

Das Polyisobutenkation I ist relativ instabil und versucht sich durch Umlagerung in höhersubstituierte Kationen zu stabilisieren. Dabei können sowohl 1,3-Methylgruppenverschiebungen zum Polyisobutenkation IV als auch sukzessive oder konzertierte 1,2-Hydrid - und 2,3-Methylgruppenverschiebungen zum Polyisobutenkation V stattfinden. Aus den Kationen IV und V können sich, je nachdem aus welcher Position das Proton abgespalten wird, jeweils drei verschiedene doppelbindungsisomere Polyisobutene bilden. Es besteht aber auch die Möglichkeit, daß sich die Kationen IV und V weiter umlagern, mit der Wirkung, daß die Doppelbindung noch weiter ins Innere des Polyisobutenmakromoleküls wandert.

Alle diese Deprotonierungen und Umlagerungen sind Gleichgewichtsreaktionen und somit reversibel, wobei allerdings, letztendlich die Bildung stabilerer, höhersubstituierter Kationen und somit die Bildung von Polyisobutenen mit innenständiger Doppelbindung unter Einstellung des thermodynamischen Gleichgewichtes bevorzugt ist. Diese Deprotonierungen, Protonierungen und Umlagerungen werden durch gegebenenfalls im Reaktionsgemisch enthaltende Säurespuren, insbesondere jedoch vom zur Katalyse der Polymerisation benötigten Lewis-Säure-Katalysator selbst katalysiert. Aufgrund dieser Sachlage und da lediglich Polyisobutene mit Vinylidendoppelbindungen gemäß Formel II sehr gut unter Adduktbildung mit Maleinsäureanhydrid reagieren, Polyisobutene der Formel III im Vergleich dazu bereits eine deutlich verminderte Reaktivität haben und andere Polyisobutene mit höhersubstituierten Doppelbindungen gegenüber Maleinsäureanhydrid praktisch unreaktiv sind, wird das fortwährende Bemühen vieler Forschungsgruppen, verbesserte Verfahren zur Herstellung hochreaktiver Polyisobutene mit immer höheren Gehalten an endständigen Doppelbindungen zu finden, verständlich.

Die Herstellung von niedermolekularem, hochreaktivem Polyisobuten aus Isobuten oder Isobuten haltigen Kohlenwasserstoffströmen, insbesondere aus von darin ursprünglich enthaltenem 1,3-Butadien weitgehend befreiten $C_4$-Schnitten aus Steamcrackern, FCC-Crackern (FCC:Fluid Catalyzed Cracking), sogenannten $C_4$-Raffinaten, ist aus einer Reihe von Schutzrechten bekannt, beispielsweise aus EP-A 145 235, EP-A 481 297, DE-A 27 02 604, EP-A 628 575, EP-A 322 241 und WO 93/10063. Alle diese Verfahren betreffen die Polymerisation von Isobuten in einer einzigen Polymerisationsstufe.

Ein Nachteil dieser Verfahren ist, daß infolge der Verwendung eines $BF_3$-Komplex-Katalysators Fluor-haltige Nebenprodukte gebildet werden. Die Fluorgehalte der nach diesen Verfahren hergestellten Polyisobutene können bis zu 200 ppm betragen. Bei der thermischen Belastung dieser Fluor-haltigen Polyisobutene kommt es zur Abspaltung von Fluorwasserstoff, der stark korrosiv ist. Besonders gravierend ist dieses Problem bei der Verwendung von Isobutenhaltigen $C_4$-Schnitten als Ausgangsmaterial, da sich hierbei - aufgrund des Gehaltes an n-Butenen - relativ stabile sekundäre Fluoride des Polyisobutens bilden, welche dann bei der weiteren Derivatisierung des Polyisobutens zu Kraftstoff- und Schmieröladditiven oder bei der späteren Verwendung dieser Kraftstoffadditive im Motor unter Fluorwasserstoffbildung abgespalten werden können und dabei Korrosionsschäden verursachen.

Ein weiterer Nachteil der einstufigen Polymerisationsführung beim Einsatz von $C_4$-Schnitten ist auf die in diesen Kohlenwasserstoffströmen enthaltenen n-Butene zurückzuführen. Durch deren Einbau in die wachsende Polymerkette kann es zum Abbruch der Polymerisation kommen und die Selektivität für die Bildung hochreaktiven Polyisobutens, d.h. Polyisobuten mit einem hohen Gehalt an Vinylidendoppelbindungen nimmt ab.

Zur Vermeidung dieses Nachteils muß nach den bislang bekannten Verfahren die Polymerisation bei einem noch relativ hohen Restisobutengehalt des in die Polymerisation eingesetzten $C_4$-Schnitts abgebrochen werden. Dies führt aber zu einem hohen Verlust an Einsatzstoff, weshalb die Herstellung von PIB aus $C_4$-Schnitten nach diesen herkömmlichen Verfahren unwirtschaftlich ist.

Der vorliegenden Erfindung lag deshalb die Aufgabe zugrunde, ein Verfahren zur Herstellung niedermolekularen, hochreaktiven Polyisobutens (PIB) zu finden, dessen Fluorgehalt deutlich unter dem Fluorgehalt des nach den bekannten Verfahren hergestellten Polyisobutens liegt. Das Verfahren sollte insbesondere auch die Herstellung von PIB niederen Fluorgehalts und hoher Endständigkeit der Doppelbindungen aus $C_4$-Kohlenwasserstoffströmen ermöglichen und wirtschaftlich sein. Des weiteren sollte das so hergestellte PIB eine enge Molekulargewichtsverteilung D haben.

Dementsprechend wurde ein Verfahren zur Herstellung von niedermolekularem, hochreaktivem Polyisobuten eines mittleren Molekulargewichts $M_n$ von 500 bis 20000 Dalton, einem Gehalt an endständigen Doppelbindungen von über 80 Mol-% durch die Polymerisation von Isobuten oder Isobuten-haltigen Kohlenwasserstoffströmen in der flüssigen Phase und mit Hilfe eines Bortrifluorid-Komplex-Katalysators bei Temperaturen von -40 bis 0°C und bei einem Druck von 1 bis 20 bar gefunden, das dadurch gekennzeichnet ist, daß man die Polymerisationsreaktion in mindestens zwei Polymerisationsstufen durchführt, wobei in der ersten Polymerisationsstufe das zugeführte Isobuten bis zu einem Teilumsatz von bis zu 98 % polymerisiert und die Polymerisation des restlichen Isobutens ohne oder nach vorheriger Abtrennung des in der ersten Polymerisationsstufe gebildeten Polyisobutens in einer oder mehreren nachfolgenden

Polymerisationsstufen weiterführt und daß man die Polymerisation in der zweiten Polymerisationsstufe bei einer tieferen Polymerisationstemperatur durchführt als in der ersten Polymerisationsstufe. Das erfindungsgemäße Verfahren beruht auf Erkenntnissen, welche von den Erfindern im Zusammenhang mit Untersuchungen zur Bildung Fluor-haltiger organischer Nebenprodukte bei der PIB-Herstellung mittels $BF_3$-Komplex-Katalysatoren gewonnen wurden und die gemäß dem folgenden Formelschema interpretiert und als Arbeitshypothese für die vorliegende Erfindung benutzt wurden. In diesem Formelschema wird stellvertretend für andere $BF_3$-Komplex-Katalysatoren ein $BF_3$-Alkohol-Komplex verwendet.

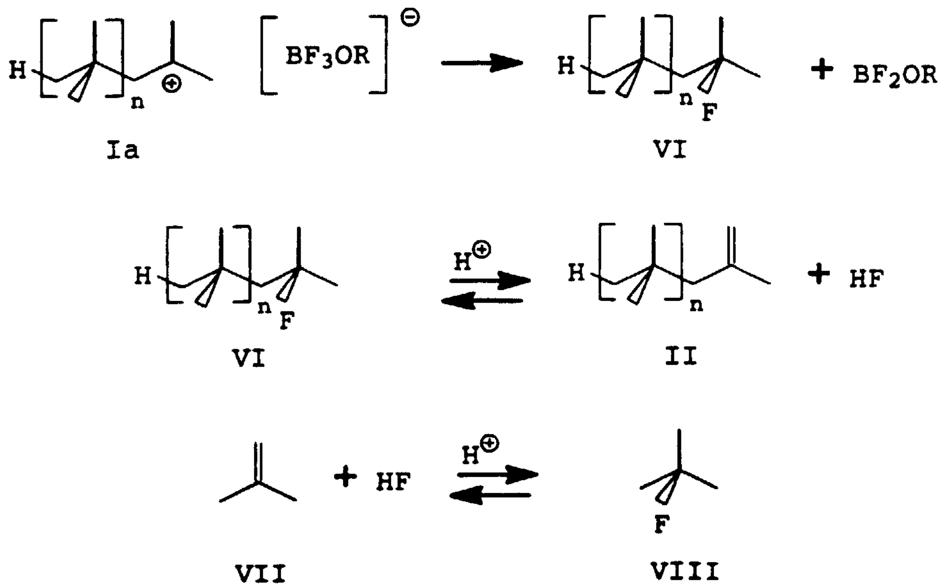


Ia VI

VI II

VII VIII

R: organischer Rest

Ausgangspunkt in diesem Formelschema ist das im Zuge der Isobuten-Polymerisation entstehende Polyisobutyl-Kation Ia, dessen Gegenion das $[BF_3OR]^-$ ·Anion ist. Aus diesem Anion kann ein Fluoridanion auf das Polyisobutylkation Ia unter Bildung des Polyisobutylfluorids VI und $BF_2OR$ übertragen werden. Dieses steht in Gegenwart von in der Polymerisationsmischung vorhandenen Protonen im Gleichgewicht mit dem Polyisobuten II und Fluorwasserstoff. Der gebildete Fluorwasserstoff kann sich an das ebenfalls in der Polymerisationsmischung enthaltene Monomer Isobuten VII addieren, das in Gegenwart von Protonen mit dem hierbei gebildeten tert.-Butylfluorid VIII im Gleichgewicht steht. Durch Extraktion oder Neutralisation des BF3-Komplex-Katalysators bzw. der Polymerisationsmischung wird die Einstellung dieser Gleichgewichte unterbunden.

Bei Verwendung von Isobuten-haltigen $C_4$-Schnitten, die außerdem noch lineare Butene enthalten, wird die im Formelschema dargestellte Reaktionsfolge noch weiter dadurch kompliziert, daß durch den Einbau von 1-Buten in die wachsende Polyisobutenkette sekundäre Carbeniumionen im Polymer gebildet werden, die im Falle einer Fluorid-Übertragung aus dem Anion, zu sekundären Polyisobutylfluoriden reagieren können, aus denen das Fluor unter den Polymerisationsbedingungen nur noch schwierig abzuspalten ist.

Die Einstellung der im Formelschema dargestellten Gleichgewichte als auch deren Verschiebung ist von den angewandten Reaktionsbedingungen, insbesondere der im Polymerisationsgemisch vorliegenden Mengenverhältnisse von Polymer und Monomeren, der Art des $BF_3$-Komplex-Katalysators und dem Mengenverhältnis $BF_3$-Komplexbildner abhängig, weiterhin auch von der eingestellten Polymerisationstemperatur.

In Anbetracht dieser Ergebnisse war es das Ziel der vorliegenden Erfindung, die Reaktionsführung der Isobuten-Polymerisation so zu gestalten, daß die Bildung Fluor-haltiger organischer Nebenprodukte, insbesondere von Polyisobutylfluoriden, auf ein Minimum unterdrückt wird, ohne daß dabei die Bildung von niedermolekularem Polyisobuten mit einem hohen Gehalt an Vinylidendoppelbindungen beeinträchtigt wird.

Dieses Ziel wurde durch die Maßnahme der Durchführung der Isobuten-Polymerisation in mindestens zwei Polymerisationsstufen erreicht, wobei die zweite Polymerisationsstufe oder weitere nachfolgende Polymerisationsstufen bei einer in der Regel tieferen Temperatur betrieben werden als die erste Polymerisationsstufe.

Das erfindungsgemäße Verfahren und einige vorteilhafte Ausgestaltungen dieses Verfahrens werden im folgenden erläutert.

In seiner einfachsten Ausgestaltung wird das erfindungsgemäße Verfahren mit zwei Polymerisationsstufen

betrieben. Zur Erzielung hoher Gehalte an endständigen Doppelbindungen und eines niedrigen Fluorgehalts des Polyisobutens kann dabei auf verschiedenerlei Weise vorgegangen werden.

Beispielsweise ist es möglich, in der ersten Polymerisationsstufe einen Isobutenumsatz von 5 bis 98 %, vorzugsweise von 50 bis 95 %, insbesondere von 50 bis 90 %, einzustellen und in der zweiten Stufe die Polymerisation dann zu Ende zu führen.

Die zweite Polymerisationsstufe wird dabei vorteilhaft bei einer niedrigeren Polymerisationstemperatur betrieben als die erste Polymerisationsstufe, in der Regel beträgt die Temperaturdifferenz dabei 1 bis 20°C, vorzugsweise 2 bis 10°C.

Da die Polymerisation des Isobutens exotherm verläuft, wird die Polymerisationstemperatur in der ersten Polymerisationsstufe bei vorgegebener Kühlmitteltemperatur und in Abhängigkeit von der Reaktivität des eingesetzten Katalysators durch die Zufuhr frischen Isobutens so gesteuert, daß sie, von technisch unvermeidbaren Schwankungen abgesehen, im wesentlichen konstant bleibt. Der Isobutenumsatz in der ersten Polymerisationsstufe wird dabei unter Berücksichtigung obengenannter Parameter, nämlich Kühlmitteltemperatur, Polymerisationstemperatur und einer mittleren Verweilzeit des Reaktionsgemisches im Reaktor, durch die Einstellung der Reaktivität des Katalysatorkomplexes über die Dosierung des Komplexbildners gesteuert.

Der Austrag aus der ersten Polymerisationsstufe wird vorzugsweise ohne weitere Aufarbeitung in die zweite Polymerisationsstufe geleitet. Hier wird die Polymerisation ohne Zusatz frischen Isobutens bei einer tieferen Polymerisationstemperatur als in der ersten Polymerisationsstufe vorgenommen. Dies kann durch eine tiefere Temperatur des Kühlmittels bewirkt werden, oder bei Verwendung eines Kühlmittels gleicher Temperatur wie in der ersten Polymerisationsstufe, beispielsweise bei Mitbenutzung der dort verwendeten Kühlvorrichtung, indem man die Kühlung so steuert, daß mehr Wärme aus dem Polymerisationsgemisch abgeführt wird als dort bei der Polymerisation des restlichen Isobutens freigesetzt wird. Unter Umständen kann es erforderlich oder zweckmäßig sein, im Zuge der Polymerisationsreaktion inaktivierten Katalysator durch Zufuhr von Bortrifluorid zu ergänzen oder die katalytische Aktivität des $BF_3$-Komplexkatalysators durch Zufuhr von Bortrifluorid zu erhöhen, damit die Polymerisation nicht vorzeitig zum Stillstand kommt. Dieser Zusatz von Bortrifluorid kann vor oder nach der Einleitung des Polymerisationsgemisches in die zweite Polymerisationsstufe erfolgen.

Die Verweilzeit des Polymerisationsgemisches in der ersten Polymerisationsstufe beträgt bei der Einstellung eines Isobutenumsatzes von 50 bis 90 % üblicherweise 5 bis 60 Minuten, kann aber auch kürzer oder länger sein, je nachdem, ob ein sehr aktiver oder weniger aktiver Katalysator verwendet wird. In der zweiten Polymerisationsstufe wird im allgemeinen eine Verweilzeit von 1 bis 180, vorzugsweise von 5 bis 120 Minuten eingestellt. Im allgemeinen wird in der zweiten Polymerisationsstufe der Isobutenumsatz so eingestellt, daß der Gesamtumsatz des Isobutens in der ersten und zweiten Polymerisationsstufe im allgemeinen bei 80 bis 100 %, vorzugsweise bei 90 bis 100 %, insbesondere bei 95 bis 100 %, liegt. Der Austrag aus der zweiten Polymerisationsstufe kann auf an sich herkömmliche Weise aufgearbeitet werden, beispielsweise indem man den Katalysator durch Zusatz von weiteren Komplexbildnern, beispielsweise Wasser, Alkoholen, Aminen oder Nitrilen, inaktiviert, den inaktivierten Katalysator aus dem Polyisobuten extrahiert und das PIB aus der PIB-haltigen Phase durch die destillative Abtrennung flüchtiger Bestandteile, wie Lösungsmittel, flüchtige Isobutenoligomere und niedermolekulare, flüchtige Nebenprodukte, isoliert. Das nach dieser Verfahrensweise erhaltene PIB enthält einen sehr hohen Anteil an endständigen Doppelbindungen und hat sehr geringe Fluorgehalte.

Enthält der Austrag aus der zweiten Polymerisationsstufe noch größere Mengen an nichtumgesetztem Isobuten, kann dieses Isobuten, falls in die Polymerisation Reinisobuten als Ausgangsstoff eingesetzt wurde, nach destillativer Abtrennung vom Polymerisationsaustrag, wieder vorteilhaft in die erste Polymerisationsstufe zurückgeführt werden.

Alternativ kann das nicht umgesetzte Isobuten gemeinsam mit dem Polymerisationsaustrag aus der zweiten Polymerisationsstufe ohne weitere Aufarbeitung einer dritten Polymerisationsstufe zugeführt werden und dort, bei einer tieferen Polymerisationstemperatur als in der zweiten Polymerisationsstufe zu Ende polymerisiert werden. Im allgemeinen wird die Polymerisationstemperatur in einer solchen dritten Polymerisationsstufe um 1 bis 20°C, vorzugsweise 2 bis 10°C, tiefer eingestellt als die Polymerisationstemperatur in der vorausgehenden zweiten Polymerisationsstufe. Die Einstellung der Polymerisationstemperatur kann unter Anwendung der Maßnahmen erfolgen, wie sie zuvor für die Einstellung der Polymerisationstemperatur in der zweiten Polymerisationsstufe erläutert wurden. Die Verweilzeit der Polymerisationsmischung in der dritten Polymerisationsstufe wird in Abhängigkeit von der Katalysatoraktivität und dem gewünschten Umsatz eingestellt, im allgemeinen beträgt sie 5 bis 180, vorzugsweise 10 bis 120 Minuten. Wie bei der Erläuterung der Durchführung der zweiten Polymerisationsstufe geschildert, kann es gegebenenfalls erforderlich oder zweckmäßig sein, verbrauchten Katalysator durch Zufuhr von Bortrifluorid zu ergänzen oder die Katalysatoraktivität durch Zusatz von Bortrifluorid zu erhöhen.

Obgleich die Anwendung einer zweiten und dritten Polymerisationsstufe auch beim Einsatz von Reinisobuten in die Polymerisation von Vorteil ist, erweist sie sich als besonders vorteilhaft, wenn Isobuten-haltige $C_4$-Kohlenwasserstoffströme, wie $C_4$-Raffinate oder $C_4$-Schnitte aus der Isobuten-Dehydrierung als Einsatzstoff im erfindungsgemäßen Verfahren verwendet werden, da durch sie Isobutenverluste vermieden werden, keine Aufpegelung unerwünschter Kohlenwasserstoffe infolge Rückführung nicht umgesetzten, andere Kohlenwasserstoffe enthaltenden Isobutens in die erste Polymerisationsstufe eintritt und hierdurch ein qualitativ hochwertigeres, praktisch Fluor-freies PIB mit einem hohen Gehalt an endständigen Doppelbindungen erhalten wird. Die Aufarbeitung des Polymerisationsaustrags aus der dritten Polymerisationsstufe kann auf die gleiche Weise erfolgen, wie sie bei der Aufarbeitung des Austrags aus der zweiten Polymerisationsstufe geschildert wurde.

Nach der zweiten oder gegebenenfalls nach der dritten Polymerisationsstufe noch im Polymerisationsaustrag enthaltene Restmengen an Isobuten von weniger als 2 %, vorzugsweise von bis zu 1 %, des ursprünglich im Zulauf zur ersten Polymerisationsstufe enthaltenen Isobutens, können, falls ein praktisch vollständiger Isobutenumsatz gewünscht wird, in einem der zweiten oder dritten Polymerisationsstufe nachgeschalteten Verweilzeitbehälter, der in diesem Fall die Funktion einer dritten bzw. vierten Polymerisationsstufe erfüllt, zu Ende polymerisiert werden. Der Verweilzeitbehälter kann bei der gleichen Polymerisationstemperatur betrieben werden wie die vorausgegangene Polymerisationsstufe, im allgemeinen wird darin aber eine höhere Temperatur eingestellt. So kann die Temperatur der Polymerisationsmischung im Verweilzeitbehälter -40 bis +40°C betragen, vorzugsweise wird darin die Temperatur auf 0 bis 40°C, vorzugsweise auf 0 bis 30°C, erhöht. Die Verweilzeit der Polymerisationsmischung im Verweilzeitbehälter kann 0,1 bis 3 Stunden betragen, vorzugsweise beträgt sie 0,3 bis 2 Stunden, wobei diese Verweilzeit naturgemäß entsprechend der Polymerisationstemperatur im Verweilzeitbehälter eingeregelt wird. Frischer Katalysator wird dem Polymerisationsaustrag aus der vorausgegangenen Polymerisationsstufe, der im übrigen ohne weitere Aufarbeitung in den Verweilzeitbehälter gelangt, im allgemeinen nicht mehr zugeführt. Außer einer Vervollständigung der Isobutenpolymerisation wird durch die Durchleitung des Polymerisationsaustrags durch den Verweilzeitbehälter eine weitere Reduzierung des Fluorgehaltes des entstandenen Polyisobutens bewirkt. Vermutlich wird im Verweilzeitbehälter aus noch im Polymerisationsaustrag der vorausgegangenen Polymerisationsstufe enthaltenem Polyisobutylfluorid unter Gleichgewichtseinstellung Fluorwasserstoff unter Bildung von Polyisobuten abgespalten, der teilweise von noch in der Polymerisationsmischung vorhandenem Isobuten unter Bildung von leichtflüchtigem Isobutyl- oder tert.-Butylfluorid abgefangen wird. Soweit diese leichtflüchtigen Fluoride nicht schon bei der Aufarbeitung des den Verweilzeitbehälter verlassenden Polymerisationsaustrags, die im übrigen wie zuvor geschildert erfolgen kann, abgebaut werden, können sie bei der weiteren destillativen Aufarbeitung leicht aus dem PIB adsorptiv entfernt und zerstört werden. Obgleich der Einsatz eines Verweilzeitbehälters zu vorteilhaften Ergebnissen führt, ist dieser eine fakultative Maßnahme des erfindungsgemäßen Verfahrens, da die Wirtschaftlichkeit der Verwendung dieses Verweilzeitbehälters selbstverständlich im wesentlichen von Faktoren, wie der Höhe des Isobutenumsatzes in den vorausgegangenen Polymerisationsstufen und dem Fluorgehalt des dabei erhaltenen Polyisobutens, abhängig ist.

Zur weiteren Erläuterung des erfindungsgemäßen Verfahrens dient Figur 1, in der zum Zwecke der Veranschaulichung beispielhaft eine Ausgestaltung des erfindungsgemäßen Verfahrens mit vier Polymerisationsstufen für einen einfachen Rohrreaktor schematisch dargestellt ist.

Über den Zulauf 1 wird das Isobuten oder der Isobuten-haltige Kohlenwasserstoffstrom, gegebenenfalls verdünnt mit einem inerten Lösungsmittel, in den mittels eines Kühlbads (nicht eingezeichnet) thermostatisierten Reaktor 2 geleitet. Reaktor 2 ist als Rohrreaktorschlaufe ausgestaltet, in dem die Polymerisationsmischung mittels der Pumpe 3 in Umlauf gehalten wird. Eine hohe Pumpleistung ist der Wärmeabfuhr aus dem Reaktor förderlich und sorgt für eine gute Durchmischung der Polymerisationsmischung, mithin für eine gleichbleibende, stationäre Isobutenkonzentration. Der Polymerisationskatalysator kann bereits dem Zulauf vor Eintritt in den Polymerisationsreaktor 2 zugemischt worden sein oder durch - nicht eingezeichnete - Zuführungen an praktisch beliebiger Stelle des Reaktors 2 zudosiert werden. Dabei ist es sowohl möglich, vorgeformten, d.h. außerhalb des Polymerisationsreaktors gebildeten Bortrifluorid·Komplex·Katalysator einzuleiten, als auch den verwendeten Komplexbildner und das Bortrifluorid separat in den Reaktor zu dosieren und den Polymerisationskatalysator in situ im Reaktor 2 zu erzeugen. Im letzten Fall ist darauf zu achten, daß keine hohe temporäre Bortrifluorid-Konzentration auftritt, da sich eine solche nachteilig auf den Gehalt an endständigen Doppelbindungen auswirken kann. Zweckmäßigerweise wird im Falle der in situ-Erzeugung des Katalysators der Komplexbildner vorgelegt und das Bortrifluorid erst nach Einleitung des Komplexbildners zudosiert. Nach Einstellung des gewünschten stationären Gleichgewichts im Reaktor 2 wird über die Leitung 4 der Polymerisationsaustrag aus Reaktor 2 ausgeschleust und der zweiten Polymerisationsstufe, dem Reaktor 5, zugeführt, der vorteilhaft wie Reaktor 2 als Rohrreaktorschlaufe ausgestaltet ist, in dem die Polymerisationsmischung mittels Pumpe 6 zirkuliert wird. Reaktor 5 wird durch ein nicht eingezeichnetes Kühlbad gekühlt. Zur Erhöhung der Katalysatoraktivität kann über - nicht eingezeichnete - Einlässe in die Zuleitung 4 oder vorzugsweise in die Reaktorschlaufe 5 weiteres Bortrifluorid nachdosiert werden. Nach Einstellung des gewünschten stationären Polymerisationsgleichgewichts in Reaktor 5, wird die Polymerisationsmischung aus diesem Reaktor 5 über Leitung 7 ausgetragen und dem in einem - nicht eingezeichneten - Kühlbad befindlichen Rohrreaktor 8 zugeführt, der auch als Rohrbündelreaktor ausgestaltet sein kann und vorzugsweise als Durchlaufreaktor betrieben wird. Die Verweilzeit in diesem Reaktor kann z.B. durch Einstellung der Länge des Reaktorrohres in Abhängigkeit von dessen Durchmesser eingestellt werden. Erforderlichenfalls kann über nicht eingezeichnete Einlässe in die Zuführung 7 oder vorzugsweise den Reaktor 8 zusätzliches Bortrifluorid nachdosiert werden. Der Austrag aus Reaktor 8 wird über Leitung 9 dem Verweilzeitbehälter 10 zugeführt, der in der Regel nicht gekühlt wird, und apparativ beispielsweise als Tank mit Überlauf oder ebenfalls als Rohrreaktor ausgestaltet sein kann. Über Leitung 11 wird der Austrag aus dem Verweilzeitbehälter, erforderlichenfalls nach vorhergehender Entspannung, der Aufarbeitung zugeführt, die auf an sich konventionelle Weise, vorzugsweise durch eine Wäsche mit einem Komplexbildner, durch die der Katalysator inaktiviert und die Polymerisation abgebrochen wird, besonders bevorzugt durch eine Wasserwäsche, anschließende Phasentrennung und destillative Reinigung des erhaltenen PIB von flüchtigen Bestandteilen, bewerkstelligt wird. Die vorausgegangenen Darlegungen gelten entsprechend bei Anwendung von, bei der Durchführung des Verfahrens in technischem Maßstab bevorzugten, Rohrbündelreaktoren.

Es versteht sich von selbst, daß das erfindungsgemäße Verfahren, wie es in der Figur dargestellt ist, auf vielerlei Art und Weise modifiziert werden kann, beispielsweise in dem die Polymerisation lediglich in zwei oder drei Polymerisationsstufen durchgeführt wird. Beispielsweise kann die Polymerisation bereits in den beiden ersten Polymerisationsstufen · entsprechend den Reaktoren 2 und 5 in Fig. 1 - zu Ende geführt werden. Ebenso ist es möglich, die Polymerisation in Polymerisationsstufe 1 (Reaktor 2) bis zu einem relativ hohen Isobuten-Umsatz durchzuführen und die Polymerisation ohne den Einsatz eines dem Reaktor 5 gemäß Fig. 1 entsprechenden Reaktors in einem dem Reaktor 8 gemäß Fig. 1 entsprechenden Reaktor und gewünschtenfalls zusätzlich in einem Verweilzeitbehälter durchzuführen. Einer solchen Ausführungsform entspricht im wesentlichen auch die Ausgestaltung des erfindungsgemäßen Verfahrens, bei der die Reaktoren 2 und 5 gemäß Fig. 1 praktisch zu einer einzelnen Polymerisationsstufe zusammengefaßt sind, wobei unter praktisch gleichen Polymerisationsbedingungen die Umsetzung in einem Reaktor 2 von Fig. 1 entsprechenden Polymerisationsreaktor nur bis zu einem Isobutenumsatz von z.B. 4 bis 10 % durchgeführt wird und der Austrag aus diesem ersten Reaktor ohne weitere Aufarbeitung dem zweiten Reaktor, der in Fig. 1 dem Reaktor 5 entspricht, zugeführt wird, wo dann die Polymerisation bis zu einem höheren Umsatz vorangetrieben wird, bevor der Austrag dieses zweiten Reaktors einem die zweite Polymerisationsstufe darstellenden dritten Reaktor zugeführt wird, beispielsweise einem dem Reaktor 8 gemäß Fig. 1 entsprechenden Reaktor, wo die Polymerisation ganz oder weitestgehend zu Ende geführt wird. Die Wahl, nach welcher dieser Ausgestaltungen oder nach welchen weiteren möglichen Ausgestaltungen des erfindungsgemäßen Verfahrens im Einzelfall am vorteilhaftesten gearbeitet wird, ist unter Berücksichtigung der des in der Anlage umzusetzenden Isobuten-haltigen Ausgangsmaterials, der Art des verwendeten Bortrifluorid-Katalysators, der gewünschten PIB-Qualität und den zur Verfügung stehenden Kühlvorrichtungen usw. zu treffen, und ist eine Routinearbeit des Fachmanns bei der Auslegung der Anlage.

Gewünschtenfalls kann die Umsetzung des Isobutens auch bis zu einem Teilumsatz durchgeführt werden, bei dem noch ein hoher Gehalt an endständigen Doppelbindungen im Polyisobuten gewährleistet ist, danach die Polymerisation durch Zusatz größerer Mengen eines Komplexbildners, z.B. Wasser, abgebrochen, der das hochreaktive PIB enthaltende Austrag, wie oben dargestellt, aufgearbeitet und das bei der Aufarbeitung abgetrennte, nicht umgesetzte Isobuten enthaltende Kohlenwasserstoffgemisch auf an sich herkömmliche Weise zu niedermolekularem Polyisobuten mit einem geringeren Gehalt an endständigen Doppelbindungen weiterverarbeitet werden.

Als Katalysatoren werden im erfindungsgemäßen Verfahren Bortrifluorid-Komplexe mit Komplexbildnern verwendet, die die Polymerisationsaktivität des Bortrifluorids so beeinflussen, daß zum einen die Polymerisation ein niedermolekulares Polyisobuten ergibt und zum anderen die Isomerisierungsaktivität des Bortrifluorids hinsichtlich der Isomerisierung von endständigen zu im Inneren des Polyisobutenmoleküls gelegenen, nicht oder nur wenig reaktiven Doppelbindungen verringert wird. Geeignete Komplexbildner sind z.B. Wasser, $C_1$- bis $C_{10}$-Alkohole, $C_2$- bis $C_{10}$-Diole, $C_1$- bis $C_{20}$-Carbonsäuren, $C_4$- bis $C_{12}$-Carbonsäureanhydride sowie $C_2$- bis $C_{20}$-Dialkylether. Bevorzugt werden im erfindungsgemäßen Verfahren Komplexbildner aus der Klasse der $C_1$- bis $C_{20}$-Alkohole, insbesondere der $C_1$-$C_4$-Alkohole, und der Klasse der $C_1$ bis $C_{20}$-Dialkylether eingesetzt, wovon wiederum solche Dialkylether bevorzugt sind, in denen das Ethersauerstoff an das tertiäre Kohlenstoffatom einer tertiären Alkylgruppe gebunden ist, insbesondere solche Ether, wie sie in WO 93/10063 beschrieben sind. Von den Alkoholen haben die einwertigen, sekundären Alkohole $C_3$- bis $C_{20}$-Alkohole, wie sie in EP-A 628 575 beschrieben sind, als Komplexbildner einen besonders günstigen Einfluß auf die Polymerisations- und Isomerisierungsaktivität des Bortrifluorid-Katalysators, wobei Isopropanol und 2-Butanol besonders hervorzuheben sind. Vorzugsweise werden Bortrifluorid-Komplex-Katalysatoren im erfindungsgemäßen Verfahren eingesetzt, in denen das Molverhältnis Bortrifluorid/Komplexbildner weniger als 1, insbesondere von 0,4 bis 0,95 und besonders bevorzugt von 0,5 bis 0,8 beträgt. Wie bereits erwähnt, können die Bortrifluorid-Komplex-Katalysatoren vor ihrem Einsatz vorgeformt werden, wie dies z.B. in EP-A 145 235 beschrieben ist oder in situ im Polymerisationsreaktor erzeugt werden, wie dies in EP-A 628 575 beschrieben ist. Als Rohstoff zur Herstellung der Bortrifluorid-Komplex-Katalysatoren wird zweckmäßigerweise gasförmiges Bortrifluorid benutzt, wobei technisches, noch geringe Mengen Schwefeldioxid enthaltendes Bortrifluorid (Reinheit: 96,5 Gew.-%), vorzugsweise aber hochreines Bortrifluorid (Reinheit: 99,5 Gew.-%) verwendet werden kann. Besonders bevorzugt wird Siliciumtetrafluorid-freies Bortrifluorid zur Katalysatorherstellung verwendet.

Die Polymerisation des Isobutens kann in An- oder Abwesenheit von unter den Reaktionsbedingungen inerten Lösungsmitteln, wie gesättigten Kohlenwasserstoffen, beispielsweise Pentan, Hexan, Isooctan oder halogenierten Kohlenwasserstoffen, wie Methylenchlorid oder Chloroform, durchgeführt werden. Bei Verwendung von $C_4$-Schnitten

als Ausgangsmaterial wirken die außer dem Isobuten im $C_4$-Schnitt enthaltenen Kohlenwasserstoffe praktisch als Lösungsmittel.

Die Polymerisation zu PIB wird im technischen Maßstab vorzugsweise kontinuierlich ausgeführt. Dazu kann in an sich herkömmlichen Reaktoren, wie Rohrreaktoren, Rohrbündelreaktoren oder Rührkesseln, gearbeitet werden, vorzugsweise werden im erfindungsgemäßen Verfahren in den ersten beiden Polymerisationsstufen Schlaufenreaktoren verwendet, also Rohr- oder Rohrbündelreaktoren mit stetem Umlauf des Reaktionsgutes, wobei in der Regel das Verhältnis von Zulauf/Umlauf 1:1 bis 1:1000, vorzugsweise 1:50 bis 1:200 v/v beträgt. Es versteht sich von selbst, daß die Zulaufmenge nach Einstellung des stationären Gleichgewichts im Polymerisationsreaktor gleich der Menge des Polymerisationsaustrages ist.

Zur Vermeidung hoher lokaler und stationärer Katalysatorkonzentrationen in der Polymerisationsapparatur, die Anlaß zu Doppelbindungsverschiebungen geben können, ist es zweckmäßig sowohl bei der Einleitung vorgeformter Katalysatorkomplexe in den Reaktor als auch bei der in situ-Darstellung der Bortrifluorid-Komplexe im Reaktor für eine gute Durchmischung aller Reaktionspartner eine turbulente Strömung des Reaktionsgutes im Reaktor zu erzeugen, wozu der Reaktor beispielsweise mit geeigneten Einbauten, wie Umlenkblechen, versehen oder die Rohrquerschnitte so dimensioniert werden können, daß sich eine geeignete Strömungsgeschwindigkeit einstellt.

Die Verweilzeit des zu polymerisierenden Isobutens in den einzelnen Polymerisationsstufen kann in Abhängigkeit von der betreffenden Polymerisationsstufe 5 sec. bis mehrere Stunden betragen, vorzugsweise wird in den einzelnen Polymerisationsstufen je nach dem gewünschten Umsetzungsgrad des Isobutens in diesen Stufen eine Verweilzeit von 1 bis 180, vorzugsweise von 5 bis 120 Minuten gewählt. Wie bereits erwähnt, kann die Verweilzeit im Verweilzeitbehälter bis zu mehreren Stunden betragen. Die Bruttoreaktionsgeschwindigkeit ist von der Menge, vor allem aber dem Molverhältnis des eingesetzten Katalysators abhängig. Üblicherweise wird der Bortrifluorid/sek.-Alkohol- und/oder Dialkylether-Katalysator in Mengen von 0,05 bis 1 Gew.%, bezogen auf das eingesetzte Isobuten oder das im Kohlenwasserstoffgemisch enthaltene Isobuten, zugeführt.

Die Polymerisation wird zweckmäßigerweise bei Temperaturen unterhalb 0°C durchgeführt. Obwohl Isobuten noch bei wesentlich tieferen Temperaturen erfolgreich zu hochreaktivem Polyisobuten polymerisiert werden kann, wird im allgemeinen bei Temperaturen zwischen 0 und -40°C, insbesondere zwischen -4 und -30°C und besonders bevorzugt zwischen -10 und -25°C gearbeitet. Abweichend hiervon können im Verweilzeitbehälter durchweg höhere Temperaturen angewandt werden, beispielsweise Temperaturen bis zu 40°C. Die Polymerisation kann unter Atmosphärendruck ausgeführt werden, die Anwendung erhöhten Drucks bis zu 20 bar als auch das Arbeiten unter dem Eigendruck des Reaktionssystems, ist zweckmäßig, für das Resultat der Polymerisation aber in der Regel unerheblich. Vorteilhaft wird die Polymerisationsreaktion unter isothermen Bedingungen und unter Einstellung einer konstanten, stationären Monomerkonzentration im Reaktionsmedium betrieben, insbesondere bis zu einem Isobutenumsatz bis ca. 90 %. Bei der Polymerisation der im Polymerisationsgemisch enthaltenen Restmengen an Isobuten kann mit sinkender Isobutenkonzentration gearbeitet werden.

Die stationäre Isobutenkonzentration kann im Prinzip beliebig gewählt werden, zweckmäßigerweise wird in der Regel eine Monomerkonzentration von 0,1 bis 50, vorzugsweise von 0,2 bis 10 Gew.-%, bezogen auf die gesamte Polymerisationsmischung, eingestellt.

Da die Polymerisationsreaktion exotherm verläuft, wird die Polymerisationswärme in der Regel mit Hilfe einer Kühlvorrichtung, die beispielsweise mit flüssigem Ammoniak als Kühlmittel betrieben werden kann, abgeführt. Eine andere Möglichkeit die Polymerisationswärme abzuleiten, ist die Siedekühlung auf der Produktseite des Reaktors. Dabei wird die freiwerdende Wärme durch die Verdampfung des Isobutens und/oder anderer leicht flüchtiger Bestandteile des Isobuten-Feedstocks oder des gegebenenfalls leichtflüchtigen Lösungsmittels wie Ethan, Propan oder Butan abgeführt, wodurch die Temperatur konstant bleibt. Die Kühlung kann durch Innen- oder Außenkühlung, je nach verwendetem Reaktortyp, erfolgen. Rohrreaktoren werden vorzugsweise mittels Außenkühlung gekühlt, wobei sich die Reaktionsrohre vorteilhaft in einem Kühlbad befinden, Rührkesselreaktoren werden bevorzugt durch Innenkühlung, z. B. mittels Kühlschlangen oder durch Siedekühlung, produktseitig, thermostatisiert.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Acetonitril, Ammoniak oder wäßrige Lösungen von Mineralbasen, wie Alkalimetall- und Erdalkalimetall-Hydroxidlösungen, Lösungen von Carbonaten dieser Metalle u.ä. verwendet werden.

Im weiteren Gang der Aufarbeitung wird das Polyisobuten, zweckm&ßigerweise nach mehreren Extraktionen zur Entfernung von Restmengen an Katalysator - üblicherweise Methanol- oder Wasserwäschen - destillativ in $C_4$-Kohlenwaaaerstoffe Lösungsmittel, Oligomere und Polyisobuten getrennt. Bei der Wasserwäsche wird außer dem Katalysator auch im Zuge der Polymerisation entstandener Fluorwasserstoff entfernt.

Wird Reinisobuten als Ausgangsstoff verwendet, kann dieses, ebenso wie Isobutenoligomere und Lösungsmittel, in die Polymerisation zurückgeführt werden. Bei Verwendung von isobutenhaltigen $C_4$-Schnitten werden das nichtumgesetzte Isobuten und die übrigen $C_4$-Kohlenwasserstoffe im allgemeinen nicht zurückgeführt und für andere Zwecke eingesetzt. Leichtflüchtige Fluor-haltige Nebenprodukte, wie tert.-Butylfluorid, können vom Polyisobuten zusammen mit den anderen Kohlenwasserstoffen entfernt und destillativ oder extraktiv von diesen Kohlenwasserstoffen abgetrennt werden.

Das erfindungsgemäße Verfahren ermöglicht die wirtschaftliche Herstellung hochreaktiver Polyisobutene sowohl aus Reinisobuten als auch, besonders vorteilhaft, aus isobutenhaltigen Kohlenwasserstoffströmen. Dabei werden sehr hohe Gehalte des PIB an endständigen Doppelbindungen von über 80 Mol.-% mit sehr guten Selektivitäten und bei sehr hohen Umsätzen erzielt. Die so hergestellten Polyisobutene haben mittlere Molekulargewichte $M_n$ im Molekulargewichtsbereich von $M_n$ 500 bis 20000 Dalton, bevorzugt von 500 bis 5000 Dalton und eine enge Molekulargewichtsverteilung D.

## Beispiele

Die mittleren Molmassen ($M_n$) der gemäß den Beispielen hergestellten Polymeren wurden mittels Gelpermeationschromatographie (GPC) bestimmt, wobei standardisierte Polyisobutene zur Eichung verwendet wurden. Aus den erhaltenen Chromatogrammen wurde das Zahlenmittel $M_n$ nach der Gleichung

$$M_n = \frac{\Sigma c_i}{\Sigma \frac{c_i}{M_i}}$$

berechnet, in der $c_i$ für die Konzentration der einzelnen Polymerspecies i im erhaltenen Polymergemisch steht und in der $M_i$ das Molekulargewicht der einzelnen Polymerspecies i bedeutet. Die Molekulargewichtsverteilung, im folgenden als Dispersizität D bezeichnet, wurde aus dem Verhältnis von Gewichtsmittel des Molekulargewichts ($M_w$) und Zahlenmittel des Molekulargewichts ($M_n$) nach der Gleichung

$$\frac{M_w}{M_n} = D$$

errechnet. Das Gewichtsmittel $M_w$ wurde aus den erhaltenen Chromatogrammen mit Hilfe der Formel

$$M_w = \frac{\Sigma c_i M_i}{\Sigma c_i}$$

bestimmt.

Unter Vinylidendoppelbindungen oder endständigen Doppelbindungen werden im Sinne der vorliegenden Anmeldung solche Doppelbindungen verstanden, deren Lage im Polyisobutenmakromolekül, durch die allgemeine Formel IIa

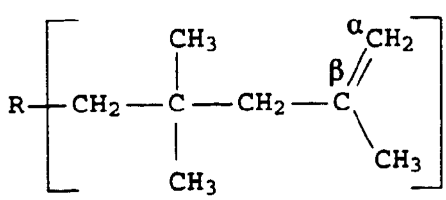

IIa

beschrieben wird, in der R für den betreffenden Polyisobutylenrest steht. Die Art und der Anteil der im erfindungsgemäß hergestellten Polyisobuten vorhandenen Doppelbindungen wurde mit Hilfe der Methode der $^{13}C$-NMR-Spektroskopie bestimmt, wobei die beiden in Formel IIa mit $\alpha$ und $\beta$ markierten Kohlenstoffatome der endständigen Doppelbindung im $^{13}C$-NMR-Spektrum durch ihre Signale bei der chemischen Verschiebung von 114,4 bzw. 143,6 ppm identifizierbar sind und der Anteil der endständigen Doppelbindungen bezüglich anderer Arten von Doppelbindungen über die Ermittlung der Peakflächen der Signale in Relation zum Gesamtintegral der Olefinsignale errechnet wird. Zur $^{13}C$-NMR-Spektroskopie wurde als Lösungsmittel deuteriertes Chloroform und als interner Standard Tetramethylsilan verwendet.

Der Gehalt an organisch gebundenem Fluor in der Polymerisationslösung als auch im Polyisobuten wurde nach herkömmlichen elementaranalytischen Methoden bestimmt: Dazu wird das organische Material durch Verbrennungsaufschluß nach Wickbold oder Schöniger aufgeschlossen, das dabei freigesetzte Fluorid in Wasser absorbiert und der Fluoridgehalt der erhaltenen wäßrigen Fluoridlösung potentiometrisch mit Hilfe handelsüblicher, für Fluoridionen selektiven Elektroden anhand einer Eichkurve bestimmt. Aus dem so gemessenen Fluoridgehalt der Lösung und der zur Verbrennung eingesetzten Probenmenge läßt sich der Gehalt an organisch gebundenem Fluorid in der Probe einfach errechnen (Lit.: F. Ehrenberger: Quantitative Elementaranalyse; VCH Verlagsgesellschaft, Weinheim, S. 436 ff, S. 424 ff, S. 617 ff).

Für die nachfolgenden Beispiele wurden außer Reinisobuten $C_4$-Schnitte der Zusammensetzung gemäß Tabelle 1 verwendet.

Tabelle 1

| $C_4$-Schnitt aus | Isobutandehydrierung | Steamcracker (Raffinat I) |
|---|---|---|
| Isobutan [Gew.-%] | 50,3 | 4,1 |
| n-Butan [Gew.-%] | 0,5 | 9,3 |
| trans-Buten-2 [Gew.-%] | 0,6 | 7,9 |
| Buten-1 [Gew.-%] | 0,1 | 28,8 |
| Isobuten [Gew.-%] | 48,0 | 45,2 |
| cis-Buten-2 [Gew.-%] | 0,3 | 4,5 |
| Butadien [ppm] | unter 50 | 87 |

Beispiel 1

Der Reaktor (≙ Reaktor 2 gemäß Fig.) bestand aus einem Teflonschlauch von 7,6 m Länge mit einem Innendurchmesser von 4 mm, über den durch eine Zahnradpumpe 50 1 Reaktorinhalt im Kreis geführt wurden. Schlauch und Pumpe hatten einen Inhalt von 100 ml. Teflonschlauch und Pumpenkopf befanden sich in einem Kältebad von -19°C (Kryostat). Als Feed wurde Raffinat I (Zusammensetzung: Tabelle 1) verwendet, der Zulauf betrug 300 g/h. Er wurde über Molekularsieb 3 Å auf einen Wassergehalt von weniger als 3 ppm getrocknet und durch eine Kapillare mit 2 mm Innendurchmesser, die auf -19°C vorgekühlt war, dem Umlaufreaktor zugeführt. Die $BF_3$- und Isopropanolmengen wurden so lange variiert, bis bei einem Isobutenumsatz von 80 % PIB eines Molgewichts $M_n$ von 1000 entstand. Die $BF_3$-Menge betrug 10 mmol, die Isopropanolmenge 15 mmol. Die Reaktortemperatur betrug -13°C.

Die Bestimmung des Isobutenumsatzes erfolgte gaschromatographisch durch Analyse des Abgases. Durch die Zuläufe, die Reaktorvolumina und die Volumenkontraktion durch Polymerisation ergab sich eine mittlere Verweilzeit von etwa 13 Minuten. Unmittelbar hinter der Druckhaltung im Austragsrohr bzw. Probenahmestutzen wurde die Polymerisation mit 15 ml/h Acetonitril abgebrochen.

Die Druckverhältnisse im Reaktor werden von seiner Geometrie, der umlaufmenge, der Viskosität des Reaktionsgemisches und der Druckhaltung bestimmt. Die Druckhaltung unmittelbar am Reaktoraustritt auf der Druckseite der Pumpe ist auf 7 bar eingestellt, bei den vorliegenden Konzentrationsverhältnissen wurden auf der Saugseite der Pumpe etwa 4 bar gemessen. Der Druckverlust des Systems betrug damit 3 bar.

Der Reaktoraustrag wurde nach dem Abbruch der Polymerisation mittels Acetonitril mit 600 ml/h heißem Wasser (60°C) in einen 1 l Rührkolben geführt und restliches Flüssiggas verdampft. Dieses Flüssiggas enthielt neben Butanen und n-Butenen noch 14,1 % Isobuten. Es wurde an einem Trockeneiskühler kondensiert, azeotrop mitgeschlepptes Wasser fror an der Oberfläche des Kühlers aus. Die Standhaltung der Trennschicht im Rührkolben erfolgte über einen Siphon, die der Mischphase durch seitlichen Ablauf mit Siphon.

Bis zur Einstellung des stationären Gleichgewichts wurden etwa 2 Stunden benötigt, danach wurde während eines Zeitraums von einer Stunde eine Mischprobe gesammelt, wie beschrieben aufgearbeitet und in gleichen Teilen Hexan aufgenommen und weiteres Wasser abgetrennt. Der Gehalt der Lösung an organisch gebundenem Fluor betrug 114 ppm. Nach destillativer Entfernung des Hexans wurden restliche flüchtige Bestandteile, wie Wasser und Oligomere, bei einem Druck von 1 mbar abs. unter Erhöhung der Temperatur bis 230°C destillativ abgetrennt. Das im Sumpf des Rotationsverdampfers verbliebene Polyisobuten wurde anschließend charakterisiert. Der Anteil an endständigen Doppelbindungen betrug 90 Mol.-%. Die Viskosität, gemessen in einem Ubbelohde-Viskosimeter betrug 198 $mm^2/s$, das mittlere Molekulargewicht $M_n$ betrug 1005 Dalton und die Molekulargewichtsverteilung D 1,5. Der Fluorgehalt betrug 65 ppm.

Das kondensierte Abgas wurde nach Trocknung über einem 3 Å Molekularsieb in einen Druckbehälter überführt, auf 50°C erwärmt und über ein Steigrohr unter Eigendruck in den vorher beschriebenen Reaktor geleitet und dort mit 2 mmol $BF_3$ und 1 mmol Isopropanol bei einer Isobutenkonzentration der Polymerisationsmischung von 0,6

Gew.-% umgesetzt.

Nach der Aufarbeitung wurde ein konventionelles Polyisobuten mit einem Gehalt an endständigen Doppelbindungen von 28 Mol.-%, einer Viskosität (100°C) von 219 $mm^2/s$, eines mittleren Molekulargewichts $M_n$ von 980 Dalton und einer Dispersizität D von 1,8 erhalten.

Weitere Angaben zur Durchführung dieses Beispiels finden sich in Tabelle 2.

Beispiel 2

Es wurde eine Polymerisationsapparatur aus 2 Umlaufreaktoren (≙ Reaktoren 2 und 5 gemäß Fig.) verwendet, wie sie in Beispiel 1 beschrieben ist. Abweichend von dieser Beschreibung waren bei diesem Versuch die Teflonschläuche im ersten Reaktor 4,5 m und im zweiten Reaktor 2,7 m lang. Die Zuläufe von je 150 g/h Hexan und Isobuten wurden, wie beschrieben, getrocknet und dem Reaktorsystem getrennt über Kapillaren mit 2 mm Innendurchmesser zugeführt. Die zugeführten $BF_3$- und Isopropanolmengen wurden so lange variiert, bis bei einer Reaktortemperatur von -7°C und bei einem Isobutenumsatz von 50 % Polyisobuten eines mittleren Molekulargewichts $M_n$ von 1040 Dalton entstand. Es wurden 15 mmol $BF_3$ und 27 mmol Isopropanol benötigt.

Der Reaktoraustrag wurde ohne weitere Zusätze und ohne Aufarbeitung in den zweiten Reaktor geleitet, der bei einer Reaktortemperatur von -14°C betrieben wurde. Hier wurde das Isobuten weiter polymerisiert, bis der Gesamtumsatz 79 % erreichte. Der Austrag dieses Reaktors wurde dann zum Abbruch der Polymerisation und zur Aufarbeitung wie in Beispiel 1 behandelt.
Das erhaltene Polyisobuten hatte einen Gehalt an endständigen Doppelbindungen von 95 Mol.-%, seine Viskosität (100°C) betrug 203 $mm^2/s$, das mittlere Molekulargewicht $M_n$ betrug 1040 Dalton und die Dispersizität D 1,5. Weitere Angaben zu diesem Beispiel sind in Tabelle 2 enthalten.

Beispiel 3

Es wurde eine Polymerisationsapparatur aus 2 Umlaufreaktoren verwendet, wie sie in Beispiel 1 beschrieben wurde. Abweichend von der Beschreibung in Beispiel 1 war bei diesem Versuch der Teflonschlauch im ersten Reaktor 0,7 und im zweiten Reaktor 6,5 m lang. Als Einsatzstoff wurde Raffinat I (Zusammensetzung: Tabelle 1) verwendet. Der Zulauf an Raffinat I wurde wie beschrieben getrocknet. Die zugeführten $BF_3$-und Isopropanolmengen wurden so lange variiert, bis bei einer Reaktortemperatur von -11°C im ersten Reaktor und bei einem Isobutenumsatz von 6 % Polyisobuten eines mittleren Molekulargewichts $M_n$ von 1000 Dalton gebildet wurde. Der Austrag aus dem ersten Reaktor wurde ohne weitere Aufarbeitung in den zweiten Reaktor geleitet. Im zweiten Reaktor, dessen Reaktortemperatur auf -13°C eingestellt worden war, wurde die Polymerisation bis zu einem Gesamtumsatz des im Zulauf enthaltenen Isobutens von 90 % weitergeführt. Nach Abbruch der Polymerisationsreaktion durch Zusatz von Acetonitril und Extraktion des inaktivierten $BF_3$-Katalysators mit Wasser wurde nicht umgesetztes Isobuten zusammen mit den übrigen im Raffinat I enthaltenen Kohlenwasserstoffen destillativ entfernt. Der Polyisobutenrückstand wurde in der gleichen Menge Hexan aufgenommen und zur Abtrennung von Wasserspuren nochmals destilliert. Nach der Extraktion hatte die erhaltene Polyisobutenlösung einen Gehalt an organisch gebundenem Fluor von 143 ppm, nach der destillativen Aufarbeitung von 3 ppm. Die destillative Aufarbeitung wurde wie beschrieben durchgeführt. Das nach der destillativen Aufarbeitung erhaltene PIB hatte ein mittleres Molekulargewicht $M_n$ von 960 Dalton, eine Dispersität von 1,6 und einen Gehalt an endständigen Doppelbindungen von 86 mol-%.

Weitere Angaben zu diesem Beispiel befinden sich in Tabelle 2.

Beispiel 4

In einem Reaktor gemäß Beispiel 1 wurden je 150 g getrocknetes Hexan und Isobuten gemäß Beispiel 2 zugeführt. $BF_3$ und Isopropanol wurden, wie beschrieben, in den vorgekühlten Hexanstrom eingespeist und die Zufuhr so lange variiert bis bei einem Isobutenumsatz von 90 %, Polyisobuten eines mittleren Molekulargewichts $M_n$ von 1015 Dalton entstand. Die Reaktortemperatur betrug -13°C, die Kühlbadtemperatur -19°C. Eine Probe des Reaktoraustrags wurde nach Abbruch der Polymerisation, Extraktion und Destillation analysiert: Der Gehalt an organisch gebundenem Fluor betrug 98 ppm, er fiel nach der destillativen Aufarbeitung auf unter 1 ppm. Der Gehalt an endständigen Doppelbindungen betrug 88 Mol.-%, die Dispersizität D 1,5.

Der Reaktoraustrag aus dem ersten Reaktor (≙ Reaktor 2 gemäß Fig.) wurde ohne Aufarbeitung in einen weiteren Reaktor (≙ Reaktor 8 gemäß Fig.) - einen 50 cm langen Teflonschlauch mit 4 mm Innendurchmesser - überführt und durch diesen im einfachen Durchgang geleitet. Der Reaktor 8 befand sich im gleichen Kühlbad wie Reaktor 2, aufgrund des geringeren Isobutenumsatzes fiel die Reaktortemperatur auf -16°C. In diesem Reaktor 8 wurde das restliche Isobuten nahezu vollständig umgesetzt.

Eine Probe des Austrags aus diesem Reaktor wurde analysiert: Bei einem Gesamtumsatz des Isobutens von

über 99 % betrug das mittlere Molekulargewicht $M_n$ des erhaltenen Polyisobutens 1015 Dalton, der Gehalt an endständigen Doppelbindungen 88 Mol.-%, die Dispersizität 1,5 und der Gehalt an organisch gebundenem Fluor vor der Destillation 93 ppm und nach der Destillation weniger als 1 ppm.

Der Reaktoraustrag aus diesem Reaktor 8 wurde ohne Aufarbeitung in einen Verweilzeitbehälter geleitet und dort bei einer mittleren Verweilzeit von 3 Stunden bei einer Temperatur von +20°C gehalten. Im Austrag aus dem Verweilzeitbehälter war das Isobuten praktisch vollständig umgesetzt, das erhaltene Polyisobuten war hinsichtlich seiner analytischen Daten mit dem Polyisobuten aus dem vorausgehenden Reaktor völlig identisch, der Gehalt an organisch gebundenem Fluor vor der Destillation betrug jedoch nur noch 5 ppm.

Weitere Angaben zu diesem Beispiel befinden sich in Tabelle 2.

Beispiel 5

Reaktor 2 gemäß Beispiel 1 wurde mit einem getrockneten $C_4$-Schnitt aus der Isobutandehydrierung (Zusammensetzung: Tabelle 1) beschickt. Mit 12 mmol $BF_3$ und 18 mmol Isopropanol wurden bei -13°C Reaktortemperatur 80 % Isobutenumsatz eingestellt. Das erhaltene Polyisobuten hatte ein mittleres Molekulargewicht $M_n$ von 1030 Dalton und einen Gehalt an endständigen Doppelbindungen von 92 % sowie eine Dispersizität D von 1,5. Der Gehalt an organisch gebundenem Fluor betrug 124 ppm vor und 15 ppm nach der Destillation. Der Austrag aus Reaktor 2 wurde ohne weitere Aufarbeitung im geraden Durchgang durch einen Rohrreaktor 8 aus einem Teflonschlauch von 1 m Länge und 4 mm Innendurchmesser geleitet. Die Reaktortemperatur betrug -21°C. Nach Durchlauf durch diesen Reaktor 8 hatte sich der Isobutenumsatz auf 99 % erhöht. Das nach Aufarbeitung erhaltene Polyisobuten war nach den Analyseergebnissen mit dem der Probe aus Reaktor 2 völlig identisch.

Weitere Angaben zu diesem Beispiel befinden sich in Tabelle 2.

**Tabelle 2**

| | Beispiel | 1 | | 2 | | 3 | | 4 | | | 5 | |
|---|---|---|---|---|---|---|---|---|---|---|---|---|
| | Reaktorkombination* | 2+5 | | 2+5 | | 2+5 | | 2+8+10 | | | 2+8 | |
| | Feed | Raffinat I | | Isobuten | | Raffinat I | | Isobuten | | | $C_4$-Dehydr. | |
| | Reaktor | 2 | 5 | 2 | 5 | 2 | 5 | 2 | 8 | 10 | 2 | 8 |
| Ausgestaltung | Rohrlänge [m] | 7,6 | 7,6 | 4,5 | 2,7 | 0,7 | 6,5 | 7,6 | 0,5 | - | 7,6 | 1 |
| | Volumen [ml] | 100 | 100 | 61 | 39 | 14 | 87 | 100 | 11 | 1200 | 100 | 17 |
| | Zulauf, gesamt [g] | 300 | 300 | 300 | 300 | 300 | 300 | 300 | 300 | 300 | 300 | 300 |
| | Umlauf/Zulauf | 100 | 100 | 100 | 100 | 100 | 100 | 100 | - | - | 100 | - |
| | mittl. Verweilzeit [min] | 13,6 | 12,6 | 8,4 | 5,7 | 1,7 | 12,1 | 14,9 | - | 180 | 14,5 | - |
| | Temperatur [°C] | -13 | -15 | -7 | -14 | -11 | -13 | -13 | -16 | +20 | -13 | -21 |
| | Druck [$bar_{abs}$] | 4-7 | 5-6 | 5-6 | 4-7 | 5 | 4-7 | 4-7 | 1 | 1 | 5-6 | 1 |
| | $BF_3$ [mmol] | 10 | 2 | 15 | | 10 | | 11 | | | 12 | |
| | Isopropanol [mmol] | 15 | 1 | 27 | | 14 | | 17 | | | 18 | |
| | Molverh. $BF_3$/Isopropanol | 0,66 | 2 | 0,55 | | 0,71 | | 0,65 | | | 0,66 | |
| | Isobutenumsatz [%] | 80 | 96 | 50 | 58 | 6 | 88,5 | 90 | 90 | - | 80 | 95 |
| | Σ Isobutenumsatz [%] | - | 99 | - | 79 | - | 90 | - | 99 | >99 | - | 99 |
| | Fluorgehalt n. E. [ppm] | 114 | 68 | - | 84 | - | 143 | 98 | 93 | 5 | 124 | 107 |
| | Fluorgehalt n. D. [ppm] | 65 | 35 | - | <1 | - | 3 | <1 | <1 | <1 | 7 | 7 |
| | endständige Doppelbindungen [Mol.-%] | 90 | 28 | - | 95 | - | 86 | 88 | 88 | 88 | 92 | 92 |
| | $Viskosität_{100°C}$ [$mm^2/s$] | 198 | 219 | - | 203 | - | 200 | 210 | 210 | 210 | 217 | 217 |
| | $M_n$ | 1005 | 980 | - | 1040 | - | 960 | 1015 | 1015 | 1015 | 1030 | 1030 |
| | D | 1,5 | 1,8 | - | 1,5 | - | 1,6 | 1,5 | 1,5 | 1,5 | 1,5 | 1,5 |

* Numerierung gemäß Fig. 1

n.E.: nach Extraktion

n. D.: nach Destillation

## Patentansprüche

1. Verfahren zur Herstellung von niedermolekularem, hochreaktivem Polyisobuten eines mittleren Molekulargewichts $M_n$ von 500 bis 20000 Dalton, einem Gehalt an endständigen Doppelbindungen von über 80 mol.-% durch die Polymerisation von Isobuten oder isobutenhaltigen Kohlenwasserstoffströmen in der flüssigen Phase und mit Hilfe eines Bortrifluorid-Komplex-Katalysators bei Temperaturen von -40 bis 0°C und bei einem Druck von 1 bis 20 bar, dadurch gekennzeichnet, daß man die Polymerisationsreaktion in mindestens zwei Polymerisationsstufen durchführt, wobei in der ersten Polymerisationsstufe das zugeführte Isobuten bis zu einem Teilumsatz von bis zu 98% polymerisiert und die Polymerisation des restlichen Isobutens ohne oder nach vorheriger Abtrennung des in der ersten Polymerisationsstufe gebildeten Polyisobutens in einer oder mehreren nachfolgenden Polymerisationsstufen weiterführt und, daß man die Polymerisation in der zweiten Polymerisationsstufe bei einer tieferen Polymerisationstemperatur durchführt als in der ersten Polymerisationsstufe.

2. Verfahren nach den Ansprüchen 1 dadurch gekennzeichnet, daß man in der ersten Polymerisationsstufe das Isobuten bis zu einem Umsatz von 5-95%, bezogen auf die der ersten Polymerisationsstufe zugeführte Isobutenmenge, polymerisiert.

3. Verfahren nach den Ansprüchen 1 und 2, dadurch gekennzeichnet, daß man in der ersten Polymerisationsstufe das Isobuten bis zu einem Umsatz von 50 bis 90 %, bezogen auf die ersten Polymerisationsstufe zugeführte Isobutenmenge, polymerisiert.

4. Verfahren nach den Ansprüchen 1 bis 3, dadurch gekennzeichnet, daß man den Austrag aus der ersten Polymerisationsstufe ohne weitere Aufarbeitung in die zweite oder eine nachfolgende Polymerisationsstufe leitet.

5. Verfahren nach den Ansprüchen 1 bis 4, dadurch gekennzeichnet, daß in der zweiten oder einer nachfolgenden Polymerisationsstufe Bortrifluorid nachdosiert wird.

6. Verfahren nach den Ansprüchen 1 bis 5, dadurch gekennzeichnet, daß man das nach Passieren der zweiten oder einer weiteren Polymerisationsstufe erhaltene Polymerisationsgemisch zur Polymerisation noch darin enthaltener Isobuten-Restmengen in einem als Nachreaktor dienenden Verweilzeitbehälter bei einer höheren Temperatur als in den vorherigen Polymerisationsstufen behandelt.

7. Verfahren nach den Ansprüchen 1 bis 6, dadurch gekennzeichnet, daß man als Bortrifluorid-Komplex-Katalysator einen Komplex oder Komplexe des Bortrifluorids mit einem $C_1$- bis $C_{20}$-Alkohol, einem tertiären Alkylether und/oder Wasser einsetzt.

8. Verfahren nach den Ansprüchen 1 bis 7, dadurch gekennzeichnet, daß man als Bortrifluorid-Komplex-Katalysator einen Komplex des Bortrifluorids mit Isopropanol oder 2-Butanol einsetzt.

## Claims

1. A process for the preparation of low molecular weight, highly reactive polyisobutene having an average molecular weight $M_n$ of from 500 to 20000 Dalton and containing over 80 mol% of terminal double bonds by the polymerization of isobutene or an isobutene-containing hydrocarbon stream in the liquid phase and with the aid of a boron trifluoride complex catalyst at from -40 to 0°C and at from 1 to 20 bar, which comprises carrying out the polymerization reaction in at least two polymerization stages, the added isobutene being polymerized to a partial conversion of up to 98% in the first polymerization stage and the polymerization of the remaining isobutene being continued in one or more subsequent polymerization stages, without ot after prior isolation of the polyisobutene formed in the first polymerization stage, and carrying out the polymerization in the second polymerization stage at a polymerization temperature which is lower than that in the first polymerization stage.

2. A process as claimed in claim 1, wherein, in the first polymerization stage, the isobutene is polymerized to a conversion of 5-95%, based on the amount of isobutene fed to the first polymerization stage.

3. A process as claimed in claims 1 and 2, wherein, in the first polymerization stage, the isobutene is polymerized to a conversion of from 50 to 90%, based on the amount of isobutene fed to the first polymerization stage.

**4.** A process as claimed in any of claims 1 to 3, wherein the discharge from the first polymerization stage is passed, without further working up, into the second or a subsequent polymerization stage.

**5.** A process as claimed in any of claims 1 to 4, wherein boron trifluoride is subsequently metered into the second or a subsequent polymerization stage.

**6.** A process as claimed in any of claims 1 to 5, wherein the polymerization mixture obtained after passage to the second or a further polymerization stage is treated in a dwell container serving as a downstream reactor, at a temperature which is higher than that in the preceding polymerization stages, in order to polymerize residual amounts of isobutene still present in said polymerization mixture.

**7.** A process as claimed in any of claims 1 to 6, wherein the boron trifluoride complex catalyst used comprises a complex or complexes of boron trifluoride with a $C_1$-$C_{20}$-alcohol, a tertiary alkyl ether or water.

**8.** A process as claimed in any of claims 1 to 7, wherein the boron trifluoride complex catalyst used is a complex of boron trifluoride with isopropanol or 2-butanol.

**Revendications**

**1.** Procédé de préparation de polyisobutènes à bas poids moléculaire et haute réactivité ayant un poids moléculaire moyen Mn de 500 à 20000 Da, une teneur en doubles liaisons terminales de plus de 80% en moles, par polymérisation d'isobutène ou de courants d'hydrocarbures contenant de l'isobutène, en phase liquide et à l'aide d'un catalyseur complexe au trifluorure de bore, à des températures de -40 à 0°C et sous une pression de 1 à 20 bar, caractérisé en ce que l'on met en oeuvre la polymérisation en au moins deux étapes de polymérisation, où, dans la première étape de polymérisation, l'isobutène introduit est polymérisé jusqu'à une conversion partielle allant jusqu'à 98%, et la polymérisation du reste de l'isobutène est effectuée en une ou plusieurs étapes de polymérisation subséquentes, sans ou après séparation préalable du polyisobutène formé lors de la première étape, et en ce que l'on met en oeuvre la polymérisation dans la deuxième étape de polymérisation, à une température de polymérisation plus basse que celle de la première étape de polymérisation.

**2.** Procédé selon la revendication 1, caractérisé en ce que l'on polymérise l'isobutène dans la première étape de polymérisation jusqu'à une conversion de 5-95%, par rapport à la quantité d'isobutène introduite dans la première étape de polymérisation.

**3.** Procédé selon les revendications 1 et 2, caractérisé en ce que l'on polymérise l'isobutène dans la première étape de polymérisation jusqu'à une conversion de 50-90%, par rapport à la quantité d'isobutène introduite dans la première étape de polymérisation.

**4.** Procédé selon l'une quelconque des revendications 1 à 3, caractérisé en ce que l'on introduit le produit de la première étape de polymérisation, sans autre étape de mise en oeuvre, dans la deuxième étape de polymérisation ou dans une étape de polymérisation subséquente.

**5.** Procédé selon l'une quelconque des revendications 1 à 4, caractérisé en ce que l'on dose le trifluorure de bore dans la deuxième étape de polymérisation ou dans une étape de polymérisation subséquente.

**6.** Procédé selon l'une quelconque des revendications 1 à 5, caractérisé en ce que l'on traite le mélange réactionnel obtenu après passage par une deuxième étape de polymérisation ou par une étape de polymérisation subséquente, pour polymériser les quantités résiduelles d'isobutène qui y sont encore contenues, dans un récipient de séjour faisant office de post-réacteur, à une température plus élevée que celles des étapes de polymérisation précédentes.

**7.** Procédé selon l'une quelconque des revendications 1 à 6, caractérisé en ce que l'on utilise, en tant que catalyseur complexe au trifluorure de bore, un complexe ou des complexes du trifluorure de bore avec un alcool en $C_1$-$C_{20}$, un alkyléther tertiaire et/ou de l'eau.

**8.** Procédé selon l'une quelconque des revendications 1 à 7, caractérisé en ce que l'on utilise, en tant que catalyseur complexe au trifluorure de bore, un complexe du trifluorure de bore avec de l'isopropanol ou du 2-butanol.

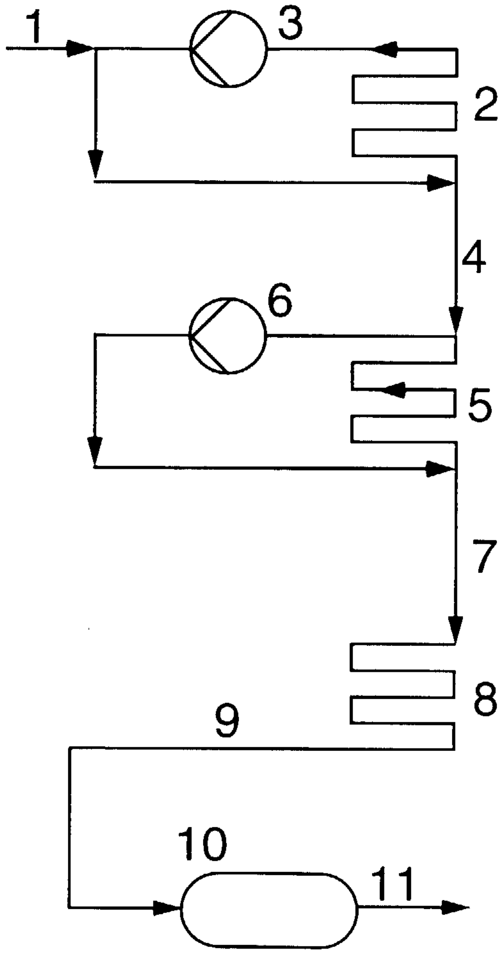
1
3
2
4
6
5
7
8
9
10
11